Europäisches Patentamt

European Patent Office

Office européen des brevets

(19)

(11) Veröffentlichungsnummer: **0 216 384**
**B1**

(12) **EUROPÄISCHE PATENTSCHRIFT**

(45) Veröffentlichungstag der Patentschrift:
20.12.89

(21) Anmeldenummer: 86113218.1

(22) Anmeldetag: 25.09.86

(51) Int. Cl.⁴: **B 63 B 1/34**

(54) Einrichtung zur Verringerung des Reibungswiderstandes.

(30) Priorität: 26.09.85 DE 3534293

(43) Veröffentlichungstag der Anmeldung:
01.04.87 Patentblatt 87/14

(45) Bekanntmachung des Hinweises auf die Patenterteilung:
20.12.89 Patentblatt 89/51

(84) Benannte Vertragsstaaten:
FR GB IT NL

(56) Entgegenhaltungen:
WO-A-80/01673

AIAA'83 - 21st AEROSPACE SCIENCES MEETING,
Reno, Nevada, 10.-13. Januar 1983, Seiten 6,18,
American Institute of Aeronautics and Astronautics,
New York, US; D.M. BUSHNELL: "AIAA-83-0227 -
Turbulent drag reduction for external flows"
MECHANICAL ENGINEERING, Band 103, Nr. 3, März
1981, Seite 71, New York, US; "Grooves reduce aircraft
drag"

(73) Patentinhaber: **Messerschmitt-Bölkow-Blohm
Gesellschaft mit beschränkter Haftung,
Robert-Koch-Strasse, D-8012 Ottobrunn (DE)**

(72) Erfinder: **Hirschel, Ernst Heinrich, Prof. Dr.,
Herzog-Heinrich-Weg 6, D-8011 Zorneding (DE)**
Erfinder: **Thiede, Peter, Prof. Dr., Ziegelweg 43,
D-2875 Ganderkesee 2 (DE)**
Erfinder: **Fleckenstein, Hubert, Blumenstrasse 2,
D-8011 Grasbrunn (DE)**

## Beschreibung

Die Erfindung bezieht sich auf eine Einrichtung, zur Verringerung des strömungsmechanischen Reibungswiderstandes einer überströmten Struktur, insbesondere bei Luft- und Raumfahrzeugen sowie Wasserfahrzeugen, durch Aufbringen einer Rillenkonfiguration auf die Strukturoberfläche.

Es ist bekannt, zusätzlich auf die umströmten Oberflächen von Tragstrukturen etc. Rillenkonfigurationen aufzubringen. Dies geschieht beispielsweise gemäß der WO 80/01673 durch die Bildung von zwei sich kreuzenden Strichsystemen, die zur Bewegungsrichtung Winkel bilden. Dadurch werden auf der Strukturoberfläche erhabene gitterförmige Strukturgebilde geschaffen, die nach einem anderen Vorschlag aus formgepreßten Folien gebildet und diese Folien an den Strukturoberflächen angeleimt werden.

In der DE-OS 1 923 633 wird zur Grenzschichtbeeinflussung von umströmten Körpern vorgeschlagen, einen Pelz nach Art einer Selbstklebefolie auf die Strukturoberfläche aufzukleben.

In allen diesen Fällen ist jedoch ein zusätzlicher Arbeitsaufwand erforderlich, außerdem wird das Strukturgewicht erhöht. Wesentlicher ist jedoch, daß das Folienmaterial sehr erosions- und verletzungsgefährdet ist und aufgrund seiner geringen Lebensdauer erfordert, daß die Rillenoberflächen wiederholt aufgebracht werden müssen.

Der vorliegenden Erfindung liegt die Aufgabe zugrunde, eine Einrichtung der eingangs genannten Art zu schaffen, die alle diese Nachteile beseitigt, d.h. ohne zusätzlichen Arbeits- und Gewichtsaufwand die Lebensdauer der Rillenoberflächenkonfiguration wesentlich erhöht.

Diese Aufgabe wird bei einer Einrichtung der vorgenannten Art dadurch gelöst, daß eine integrale Rillenoberfläche direkt aus dem Faserverbundwerkstoff-Material der herzustellenden Tragstruktur durch Formgebung bei Lege-, Oberflächenbehandlungs- oder Wickeltechnik während der Herstellung der überströmten Struktur gebildet wird. In den Unteransprüchen sind vorteilhafte Ausgestaltungen angegeben und in der nachfolgenden Beschreibung werden Ausführungsbeispiele behandelt, die in den Figuren der Zeichnung schematisch dargestellt sind. Es zeigen:

Fig. 1 in den Beispielen a bis e Rillenformen verschiedener Querschnittsform;

Fig. 2 in den Beispielen a bis h Rillenfelder verschiedener Ausgestaltung.

Durch das Aufbringen einer Oberflächenmikrostruktur wird bekanntlich der Reibungswiderstand turbulenter Grenzschichten um gut 10% vermindert. Das beweist, daß solche «Rillenstrukturen» sowohl energietechnisch, wie auch energieökonomisch von Bedeutung sind. Solche Oberflächenmikrostrukturen sind deshalb bei allen überströmten Oberflächen von Vorteil, insbesondere bei Systemen mit Außenströmungsbelastungen, wie Flugzeuge, Wasser- und Landfahrzeuge. Der vorteilhafte Effekt tritt aber auch bei Systemen mit Innenströmungsbelastung genauso auf, also bei Einlaufströmungs- und Düsenströmungssystemen, Energietransportsystemen für Gas- oder Flüssigkeitsströmung und Förderkanäle.

Da nun der Reibungswiderstand einer umströmten Oberfläche vor allem dort Bedeutung erlangt, wo höhere Transportgeschwindigkeiten auftreten, bedeutet dies gleichzeitig auch eine höhere mechanische Belastung dieser Oberfläche. Es ist zum einen denkbar, daß Oberflächen mit einer feinen Rillenstruktur $S < S^*$, wobei $S$ den Abstand zweier benachbarter Rillenoberkanten und $S^*$ den kritischen Abstand zweier benachbarter Rillenoberkanten darstellt, den Reibungswiderstand reduzieren, aber auch zum anderen bei geeigneter Rillenstruktur $S < S^*$ die Funktion von Turbulenzgeneratoren übernehmen können.

Für die Rillenstruktur gilt die Formel:

$$S^* \approx 40 \cdot \frac{\gamma}{\sqrt{\tau_\omega/\rho}}$$

wobei

$\gamma$   die kinematische Zähigkeit an der Oberfläche
$\rho$   die Dichte
$\tau_\omega$  die Wandschubspannung an der glatten Oberfläche darstellen.

Aufgrund der neuen Technologien werden Tragstrukturen wie Flügel, Rümpfe, Schalen, Behälter, Röhren usw. nicht mehr in Metallausführungen gefertigt, sondern aus Faserverbundwerkstoffen. Hier setzt nun die Erfindung ein und schlägt vor, schon bei der Herstellung der jeweils gewünschten Struktur integrale Rillenoberflächen vorzusehen und zwar so, daß die Rillen sich aus der Materialstruktur ergeben. Dies ist sowohl bei Duroplastmaterialien wie CFK, GFK, SFK bzw. Keramik- und Faserkeramikwerkstoffen möglich, wie auch bei Thermoplastwerkstoffen mit Fasereinlagen. Die Filamentdicke des jeweils gewählten Faserverbundwerkstoffes garantiert die notwendige Kantenschärfe solcher Rillen.

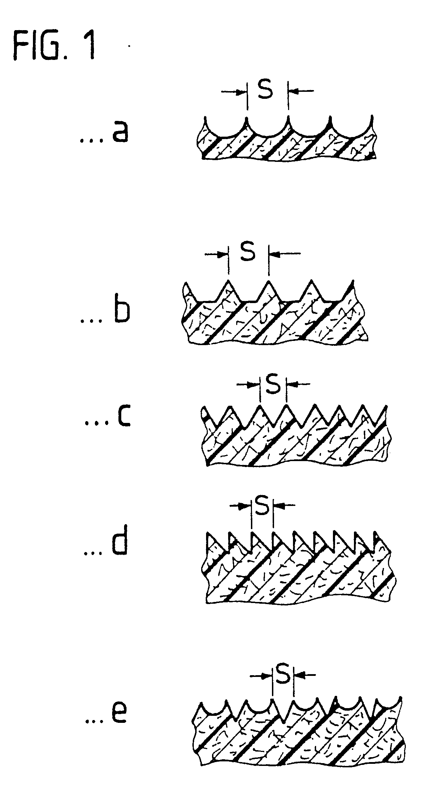

Diese FVW-Materialien weisen eine endlos unidirektionale Verlegung der Verstärkungsmateriallagen auf der Strukturoberfläche auf, die nach einer Richtung ausgerichtet sind und wobei die Matrix so weit von der Faser zurücktritt, daß Rillen nach den in der Fig. 1 gezeigten Beispielen geformt werden können.

Im Beispiel a ist eine Rillenquerschnittsform gezeigt, bei der die scharfen Kanten nach außen gestellt sind und der Boden rund gewölbt ist.

Im Beispiel b sind die scharfen Kanten ebenfalls nach außen gerichtet, der Boden ist jedoch eben.

In den Beispielen c und d sind Sägezahnformen aufgezeigt und im Beispiel e ist ein Ausführungsbeispiel mit Doppeloberkante und Zwischeneinschnitt gezeigt. In allen Fällen herrscht die Bedingung $S < S^* \leq 0,25$ mm vor.

Diese Formgebung läßt sich nun durch verschiedene Maßnahmen erreichen. Einmal durch entsprechende Gestaltung der Werkzeugoberfläche bei der FVW-Legetechnik oder durch Oberflächennachbehandlung nach dem Teilaushärteprozess der FVW-Oberfläche, beispielsweise durch oberflächenmechanisches Sandstrahlen. Weiterhin kann die Formgebung durch Oberflächenkonturierung nach dem Wickelprozess während der Trocknungsphase erfolgen oder durch Formieren des Abreißgewebes an sogenannten FVW-Prepregs.

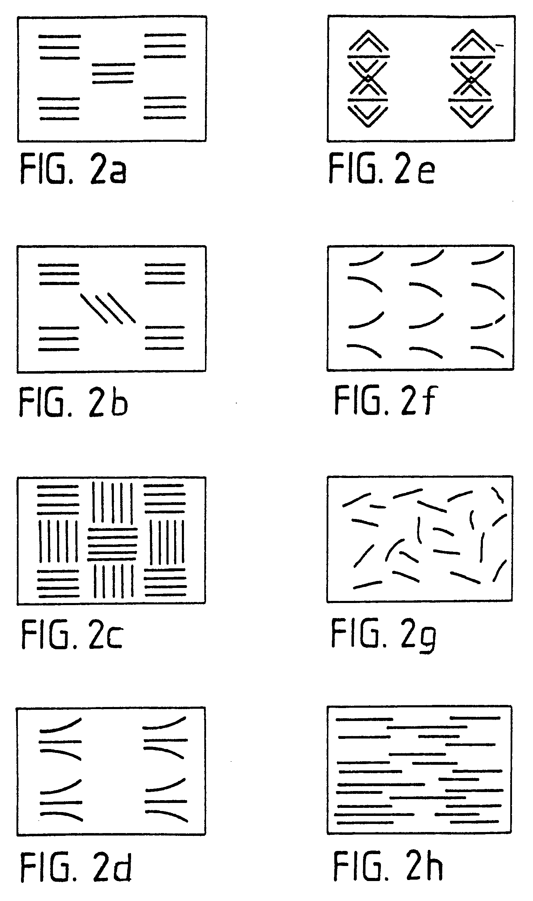

In der Fig. 2 sind nun weitere Ausführungsbeispiele gezeigt, bei denen die FVW-Materialien eine gerichtete bzw. formierte Kurzfaserverstärkungslage auf der Strukturoberfläche in Form von sogenannten Rillenfeldern aufweisen, die nach gewünschter oder erforderlicher Oberflächenrillenform ausgerichtet sind. Diese Harzfaserverstärkungslagen können nun VERPREG-Gelege ® sein oder nach der SMC-Technik aufgebracht sein.

In dem Beispiel a der Fig. 2 ist ein gleichgerichtetes Rillenfeld skizziert, wobei für dieses und alle nachfolgenden Rillenfelder gilt, daß die Rillenausbildung gemäß den in Fig. 1 aufgezeigten Beispielen bzw. Ausführungsformen erfolgt.

In dem Ausführungsbeispiel b ist ein gleichgerichtetes Rillenfeld mit symmetrischem Querfeld gezeigt und im Beispiel c ein solches mit um 90° zueinander versetzten Rillenfeldern. Im Beispiel d wird ein nicht parallel gerichtetes Rillenfeld und im Beispiel f ein gerichtetes Auslaufrillenfeld gezeigt. Beim Beispiel e handelt es sich um ein geschlossenes Dreieck-Rillenfeld, wogegen es sich auch um ein sogenanntes Wirr-Rillenfeld — wie im Beispiel g gezeigt — handeln kann. Letztlich wird noch ein Rillenfeld mit parallelen Rillen verschiedener Länge und Lage im Beispiel h vorgestellt. Bei den Beispielen e bis h ist die Rillenausbildung ebenfalls so wie in Fig. 1 gezeigt, soweit diese parallel oder näherungsweise parallel und der Abstand der Rillen mit S ≤ S* (mm) ausgeführt ist.

Die FVW-Materialien können nun auch eine Endlos-Faserstruktur haben, wobei dann diese «Faserrovings» in Gewebebindung (in Anlehnung an DIN 61 850) verarbeitet sind. Die bekanntesten sind ATLAS-, Körper- und Leinwandbindung bzw. deren Kombinationen. Auch hier tritt die MATRIX — ganz gleich wie geartet — von der Faseroberfläche zurück.

**Patentansprüche**

1. Einrichtung zur Verringerung des strömungsmechanischen Reibungswiderstandes einer überströmten Struktur, insbesondere bei Luft- und Raumfahrzeugen sowie Wasserfahrzeugen durch Aufbringung einer Rillenkonfiguration auf die Strukturoberfläche, dadurch gekennzeichnet, daß eine integrale Rillenoberfläche direkt aus dem Faserverbundwerkstoff-Material der herzustellenden Tragstruktur durch Formgebung bei der Lage-, Oberflächenbehandlungs- oder Wickeltechnik während der Herstellung der überströmten Struktur gebildet wird.

2. Einrichtung nach Anspruch 1, dadurch gekennzeichnet, daß die Faserverbundwerkstoff-Materialien auf der Trag-Strukturoberfläche nach einer Richtung endlos unidirektional gelegte Verstärkungsmateriallagen aufweisen, wobei die Matrix so weit von den Fasern zurücktritt, daß Rillen bzw. Rillenfelder gewünschter Formen entstehen.

3. Einrichtung nach den Ansprüchen 1 oder 2, dadurch gekennzeichnet, daß die Faserverbundwerkstoff-Materialien auf der Tragstrukturoberfläche formierte Kurzfaser- bzw. Harzfaserverstärkungslagen aufweisen, die nach der jeweils gewünschten Rillenform ausgerichtet sind.

4. Einrichtung nach den Ansprüchen 1 bis 3, dadurch gekennzeichnet, daß die Faserverbundwerkstoff-Materialien eine Endlos-Faserstruktur aufweisen, wobei diese «Faserrovings» in Gewebebindung so verarbeitet sind, daß die gewählte Matrix von der Faseroberfläche zurücktritt.

5. Einrichtung nach den Ansprüchen 1 bis 4, dadurch gekennzeichnet, daß der Abstand S der Rillenoberkanten bei allen Rillenformen und Rillenausgestaltungen dem Wert

$$S^* \approx 40 \cdot \frac{\gamma}{\sqrt{\tau_\omega/\rho}}$$

entspricht, wobei
$\gamma$   die kinematische Zähigkeit des Fluids an der Oberfläche
$\rho$   die Dichte des Fluids
$\tau_\omega$   die Wandschubspannung an der glatten Oberfläche und
$S^*$   den kritischen Abstand der Rillenoberkanten mit S < S* darstellen.

**Claims**

1. An arrangement for reducing the fluidic surface-friction drag of a structure over which there is flow, particularly in aircraft and spacecraft as well as vessels, by applying a grooved configuration to the surface of the structure, characterised in that an integral grooved surface is formed directly from the fibre composite material of the supporting structure to be produced, by shaping in the laying, surface-treatment or winding technique during the production of the structure over which there is flow.

2. An arrangement according to Claim 1, characterised in that the filbre composite materials on the surface of the supporting structure comprise layers of reinforcing material laid endlessly unidirectionally in one direction, the matrix receding so far from the fibres that grooves or grooved zones of desired shapes result.

3. An arrangement according to Claim 1 or 2, characterised in that the fibre composite materials comprise reinforcing layers of milled fibres or resinous fibres which are formed on the surface of the supporting structure and are aligned according to the particular groove shape required.

4. An arrangement according to Claims 1 to 3, characterised in that the fibre composite materials have a continuous filament structure, these «fibre rovings» being worked up in a weave so that the selected matrix recedes from the fibre surface.

5. An arrangement according to Claims 1 to 4, characterised in that in all groove forms and groove arrangements, the spacing S of the upper edges of the grooves corresponds to the value

$$S^* \approx 40 \cdot \frac{\gamma}{\sqrt{\tau_\omega/\rho}}$$

in which

$\gamma$    represents the kinematic viscosity of the fluid at the surface

$\rho$    represents the density of the fluid

$\tau_\omega$    represents the wall shearing stress at the smooth surface and

$S^*$   represents the critical spacing of the upper edges of the grooves with $S < S^*$.

## Revendications

1. Dispositif pour réduire la perte de charge fluidique d'une structure parcourue par un fluide pour des aéronefs ou des engins spaciaux ainsi que des véhicules aquatiques, par application d'une configuration à nervures à la surface de la structure, dispositif caractérisé en ce qu'on forme directement une surface en forme de nervures, intégrale, directement à l'aide de la matière composite à base de fibres de la structure porteuse à réaliser par mise en forme selon la technique de mise en place, de traitement de surface et de bobinage au cours de la fabrication de la structure parcourue par le fluide.

2. Dispositif selon la revendication 1, caractérisé en ce que les matériaux renforcés par des fibres présentent des couches de matière de renforcement unidirectionnelles, sans fin dans une direction à la surface de la structure porteuse, et la matrice vient en retrait par rapport aux fibres, suffisamment pour former des nervures ou des champs de nervures correspondant à des formes choisies.

3. Dispositif selon la revendication 1 ou 2, caractérisé en ce que les matériaux renforcés par des fibres présentent à la surface de la structure porteuse, des fibres courtes ou des couches de fibres de résine qui sont alignées suivant la forme souhaitée respectivement pour les nervures.

4. Dispositif selon les revendications 1 à 3, caractérisé en ce que les matériaux composites renforcés par des fibres ont une structure de fibres sans fin et de telles ébauches de fibres sont traitées dans la combinaison pour que la matrice choisie vienne en retrait par rapport à la surface extérieure des fibres.

5. Dispositif selon les revendications 1 à 4, caractérisé en ce que le retrait (S) des arêtes supérieures des fibres pour toutes les formes de nervures et toutes les réalisations de nervures correspond à la valeur:

$$S^* \approx 40 \cdot \frac{\gamma}{\sqrt{\tau_\omega/\rho}}$$

formule dans laquelle:

$\gamma$    représente la résistance cinématique du fluide à la surface

$\rho$    représente la densité du fluide

$\tau_\omega$    représente les contraintes du niveau de la surface lisse

$S^*$   représente la distance critique des arêtes supérieures des nervures avec $S < S^*$.

# FIG. 1

... a

... b

... c

... d

... e

FIG. 2a

FIG. 2e

FIG. 2b

FIG. 2f

FIG. 2c

FIG. 2g

FIG. 2d

FIG. 2h